Europäisches Patentamt

European Patent Office

Office européen des brevets

(11) Veröffentlichungsnummer: **0 299 400**
**A1**

# EUROPÄISCHE PATENTANMELDUNG

(21) Anmeldenummer: 88111019.1

(22) Anmeldetag: 11.07.88

(51) Int. Cl.4: **A47J 31/40** , **A47J 31/44** , **G01F 1/06**

(30) Priorität: 17.07.87 CH 2721/87

(43) Veröffentlichungstag der Anmeldung:
18.01.89 Patentblatt 89/03

(84) Benannte Vertragsstaaten:
AT BE DE ES FR GB IT NL SE

(71) Anmelder: **Turmix AG**
**Buechstrasse 20**
**CH-8645 Jona(CH)**

(72) Erfinder: **Gurtner, Peter**
**Meienhofstrasse 27**
**CH-8645 Jona(CH)**
Erfinder: **Frisch, Martin**
**Kronenwiese 41**
**CH-8864 Reichenburg(CH)**

(74) Vertreter: **Scheidegger, Zwicky, Werner & Co.**
**Stampfenbachstrasse 48 Postfach**
**CH-8023 Zürich(CH)**

(54) **Vorrichtung zum Zubereiten von Getränken.**

(57) Die Vorrichtung weist ein Durchflussmessgerät (1) zum Messen der zubereitenden Getränkemenge mittels eines Flügelmessrades (4) auf, das eine Mehrzahl von Messflügeln besitzt. Das Gehäuse (3) des Messgerätes (1) weist einen Einlass (6) auf, dessen Achse etwas seitlich versetzt zum Flügelmessrad verläuft, um eine tangentiale Anströmung desselben zu erreichen. Der Auslass (7) ist oberhalb des Flügelmessrades (4) angeordnet und erstreckt sich als Auslasskanal (7) im wesentlichen parallel zur Achse (5) des Flügelmessrades (4). Damit wird erreicht, dass nach dem Wiederauffüllen eines zuvor leergesaugten Wassertanks innerhalb der dieses Durchflussmessgerät aufweisenden Vorrichtung keine Luftblasen das Umlaufen des Flügelmessrades (4) behindern, was zu ungenauen Messresultaten führen würde.

Fig. 1

## Vorrichtung zum Zubereiten von Getränken

Die Erfindung betrifft eine Vorrichtung zum Zubereiten von Getränken, insbesondere Espresso-Maschine, mit einem Durchflussmessgerät zum Messen der zubereiteten Getränkemenge mittels eines Flügelmessrades.

Vorrichtungen dieser Art, insbesondere Kaffeemaschinen, weisen ein Messgerät mit einem Flügelmessrad auf, das stirnseitig mit Magneten versehen ist, die über eine entsprechende Sensoranordnung einen elektronischen Messvorgang einleiten, durch den die durch das Messgerät durchgeflossene Flüssigkeitsmenge bestimmt werden kann. Ein Messgerät dieser Art ist aus der DE-OS 34 42 358 bekannt. Dieses Messgerät arbeitet in herkömmlichen Getränkezubereitungsgeräten hinreichend genau und zufriedenstellend. Soweit derartige Getränkezubereitungsvorrichtungen nicht an das Leitungsnetz angeschlossen sind, sondern für die Wasserversorgung mit einem separaten Wassertank versehen sind, stellt sich ein Problem ein, wenn der Tank und damit auch das Messgerät leerlaufen. Der Tank muss dann wiederum mit Wasser gefüllt werden, das dann durch das Messgerät hindurchläuft bzw. gesaugt wird. Bei den bekannten Durchflussmessgeräten sind der Einlass und der Auslass derart angeordnet, dass die Strömungsrichtung durch diese senkrecht zur Achse des Flügelmessrades verläuft. Aufgrund dieses Umstandes können sich beim vorerwähnten Leerlaufen des Tanks und des Messgerätes Luftblasen bilden, die zunächst das Umlaufen des Flügelmessrades behindern und damit zu ungenauen Messungen führen.

Der Erfindung lag daher die Aufgabe zugrunde, eine Vorrichtung der eingangs genannten Art zu schaffen, bei der auch beim Auftreten von Luft im Messgerät, wie es beispielsweise durch das Leersaugen des Tanks verursacht wird, sogleich nach erneutem Auffüllen des Vorratstanks wieder eine zuverlässige Messung der durchfliessenden Flüssigkeitsmenge sichergestellt ist.

Diese Aufgabe wird bei einer Vorrichtung der eingangs genannten Art erfindungsgemäss dadurch gelöst, dass der Auslass des Durchflussmessgerätes oberhalb der Messflügel des Flügelmessrades angeordnet ist. Durch die erfindungsgemässe Anordnung des Auslasses oberhalb der Messflügel des Flügelmessrades wird sichergestellt, dass sich im Bereich des Flügelmessrades keine Luftblasen bilden können, die die Drehung des Messrades behindern. Die Luft tritt vielmehr bei erneuter Flüssigkeitszufuhr unmittelbar durch den oberhalb der Messflügel beginnenden Auslass aus dem Messgerät aus. In bevorzugter Ausgestaltung ist vorgesehen, dass das Durchflussmessgerät einen im wesentlichen parallel zur Achse des Flügelmessrades sich erstreckenden Auslasskanal aufweist. Die erfindungsgemässe Ausgestaltung bietet insbesondere bei Einsatz des Messgerätes auf der Saugseite einer Pumpe einer Espresso-Maschine den zusätzlichen Vorteil, dass nicht wie bei bekannten Messgeräten eine Luftblase aufgrund ihrer Kompressibilität beim Austreten aus dem Messgerät die Ursache dafür ist, dass die Pumpe nicht mehr ansaugen kann.

Weitere Vorteile und Einzelheiten der Erfindung ergeben sich aus den Ansprüchen und der nachfolgenden Beschreibung, in welcher ein Ausführungsbeispiel der Erfindung anhand der Zeichnungen näher erläutert ist. Es zeigen:

Fig. 1 eine schematische Darstellung einer Ausführungsform des Durchflussmessgerätes;

Fig. 2 die erfindungsgemässe Vorrichtung in schematischer Darstellung mit dem Durchflussmessgerät.

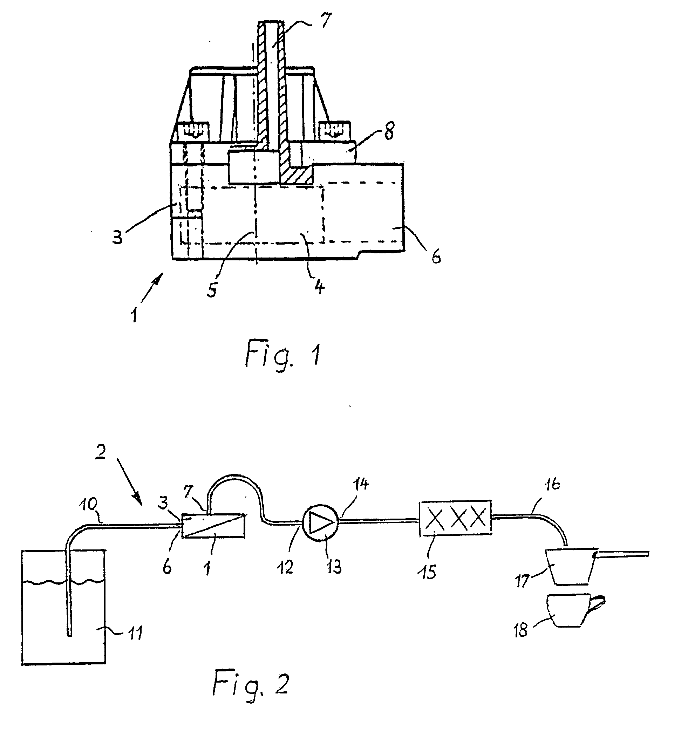

Das in Fig. 1 dargestellte Messgerät 1 zum Messen des Durchflusses in einer in Fig. 2 schematisch dargestellten Vorrichtung 2 für die Zubereitung von Getränken, insbesondere einer Kaffee- oder Espresso-Maschine, weist in einem Gehäuse 3 ein strichpunktiert dargestelltes Flügelrad 4 auf, welches eine Anzahl Messflügel besitzt und eine vertikale Drehachse 5 aufweist, die in dem Gehäuse 3 gelagert ist. Die Drehung des Flügelrades 4 wird elektromagnetisch auf einen nicht dargestellten elektronischen Zähler übertragen, wie es beispielsweise aus der DE-OS 34 42 358 bekannt ist. Das Messgerät gemäss Fig. 1 weist einen Einlass 6 auf, durch den die Flüssigkeit senkrecht zur Drehachse 5 des Flügelrades 4 in das Messgeräte-Gehäuse einströmt, und zwar vorzugsweise seitlich versetzt zu der Drehachse 5, damit eine etwa tangentiale Anströmung des Messflügelrades erreicht wird. Das Messgerät weist ferner einen Auslass 7 auf, der oberhalb des Flügelmessrades angeordnet ist, d.h. es ist ein Auslasskanal 7 vorhanden, der sich im wesentlichen parallel zur Achse 5 des Flügelmessrades 4 erstreckt. Der Auslass ist somit nicht wie bei den bekannten Messgeräten in der gleichen Ebene wie der Einlass angeordnet. Der Auslasskanal 7 erstreckt sich durch den auf das Messgerät-Gehäuse 3 aufgeschraubten Deckel 8 hindurch.

Aus Fig. 2 geht hervor, dass der Einlass des Durchflussmessgerätes 1 über eine Leitung 10 mit einem Vorratsbehälter 11 in Verbindung steht. Der Auslass 7 ist an der Saugseite 12 einer Pumpe 13 angeschlossen, deren Auslass 14 mit einem Durchlauferhitzer 15 verbunden ist, in welchem die Flüssigkeit zwecks Zubereitung des Getränkes erhitzt wird. Unterhalb der Austrittsöffnung 16 des Durchlauferhitzers 15 ist ein Siebhalter 17 angeordnet, in welchem das für die Herstellung des Getränks notwendige Produkt wie beispielsweise Kaffeepulver enthalten ist, durch welches die erhitzte Flüssigkeit hindurchgedrückt wird, so dass das fertig zubereitete Getränk in eine darunter befindliche Tasse 18 oder ein anderes Auffanggefäss gelangt.

**Ansprüche**

1. Vorrichtung zum Zubereiten von Getränken, insbesondere Espresso-Maschine mit einem Durchflussmessgerät zum Messen der zubereiteten Flüssigkeitmenge mittels eines Flügelmessrades, dadurch gekennzeichnet, dass der Auslass (7) des Durchflussmessgerätes (1) oberhalb der Messflügel des Flügelmessrades (4) angeordnet ist.

2. Vorrichtung nach Anspruch 1, dadurch gekennzeichnet, dass der Auslass (7) in den Innenraum des Durchflussmessgerätes (1) von oben einmündet.

3. Vorrichtung nach Anspruch 1, dadurch gekennzeichnet, dass das Durchflussmessgerät (1) einen im wesentlichen parallel zur Achse (5) des Flügelmessrades (4) sich erstreckenden Auslasskanal (7) aufweist.

4. Vorrichtung nach einem der vorhergehenden Ansprüche, dadurch gekennzeichnet, dass der Einlass (6) und der Auslass (7) des Durchflussmessgerätes (1) im Winkel zueinander, vorzugsweise im rechten Winkel zueinander, angeordnet sind.

5. Vorrichtung nach Anspruch 3, dadurch gekennzeichnet, dass der parallel zur Achse (5) des Flügelmessrades (4) sich erstreckende Auslass (7) zwischen dieser Achse (5) und dem Einlass (6) angeordnet ist.

6. Vorrichtung nach einem der vorhergehenden Ansprüche, dadurch gekennzeichnet, dass der Auslass (7) des Durchflussmessgerätes (1) über eine Leitung an den Einlass (12) einer Saugpumpe (13) angeschlossen ist.

Fig. 1

Fig. 2

| EINSCHLÄGIGE DOKUMENTE | | EP 88111019.1 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 2 847 673 (SACCANI)<br>* Gesamt *<br><br>-- | 1-4 | A 47 J 31/40<br>A 47 J 31/44<br>G 01 F 1/06 |
| Y | US - A - 3 867 840 (BAATZ)<br>* Gesamt *<br><br>-- | 1-4 | |
| Y | CH - A5 - 635 504 (BREVETTI GAGGIA S.P.A.)<br>* Gesamt *<br><br>-- | 1,3,4 | |
| Y | EP - A2 - 0 180 944 (VMEI "LENIN")<br>* Gesamt *<br><br>-- | 1,3,4 | |
| A | DE - A1 - 2 852 109 (GROSSI)<br>* Gesamt *<br><br>-- | 1 | **RECHERCHIERTE SACHGEBIETE (Int. Cl.4)** |
| D,A | DE - A1 - 3 442 358 (DIGMESA AG)<br>* Gesamt *<br><br>-- | 1 | A 47 J 31/00<br>G 01 F 1/00<br>G 07 F 13/00 |
| A | FR - A3 - 2 544 187 (NUOVA FAEMA S.P.A.)<br>* Gesamt *<br><br>---- | 1 | |

Der vorliegende Recherchenbericht wurde für alle Patentansprüche erstellt.

| Recherchenort | Abschlußdatum der Recherche | Prüfer |
|---|---|---|
| WIEN | 23-09-1988 | BEHMER |